# EUROPEAN PATENT APPLICATION

(11) **EP 4 335 269 A1**
(43) Date of publication of application: **13.03.2024**
(21) Application number: 23194271.5
(22) Date of filing: 30.08.2023
(51) Int. Cl.: A01B 69/04

(54) **TRAVEL CONTROL METHOD, TRAVEL CONTROL SYSTEM, AND TRAVEL CONTROL PROGRAM**

(30) Priority: 12.09.2022 JP 2022144448
(71) Applicant: Yanmar Holdings Co., Ltd., Osaka-shi, Osaka (JP)
(72) Inventor: MIYAKE, Koji, Okayama-shi (JP); NISHII, Yasuto, Okayama-shi (JP); MIYAI, Kenichi, Okayama-shi (JP)
(74) Representative: Dennemeyer & Associates S.A.

(57) **Abstract**

[Problem] To provide a travel control method, a travel control system, and a travel control program that are capable of appropriately switching from autonomous travel to manual travel.

[Solution] A reception processing unit 112 receives a user operation performed with respect to an operation tool that causes a work vehicle 10 to execute a predetermined motion. A motion processing unit 114 causes the work vehicle 10 to execute a motion corresponding to the user operation performed with respect to the operation tool. A travel processing unit 111 switches from autonomous travel to manual travel when a change amount relating to the operation tool corresponding to the user operation exceeds a threshold while the work vehicle 10 is performing autonomous travel. A setting processing unit 116 sets the threshold based on at least one of setting information and work information of the work vehicle 10.

## Description

### TECHNICAL FIELD

The present invention relates to a travel control method, a travel control system, and a travel control program that cause a work vehicle to travel.

### BACKGROUND ART

Conventionally, as a work vehicle capable of performing autonomous travel, a work vehicle is known that performs autonomous travel only during straight travel, and travels (by manual travel) according to manual steering (manual operation) by an operator when turning. For example, a technique is known that switches from autonomous travel to manual travel when a steering device is operated by an operator during autonomous travel of a work vehicle (for example, see Patent Document 1).

### PRIOR ART DOCUMENT

### PATENT DOCUMENT

Patent Document 1: Japanese Unexamined Patent Application Publication No. 2005-081982

### SUMMARY OF INVENTION

### TECHNICAL PROBLEM

However, because the conventional technique has a configuration that switches from autonomous travel to manual travel by detecting a steering state of a steering device, there is a problem that switching to manual travel may occur while the work vehicle is performing autonomous travel when a steering direction of the steering device changes in a location that is not intended by the operator.

An object of the present invention is to provide a travel control method, a travel control system, and a travel control program that are capable of appropriately switching from autonomous travel to manual travel.

### SOLUTION TO PROBLEM

The travel control method according to the present invention is a method that controls travel of a work vehicle that is capable of switching between autonomous travel performed by automatic steering and manual travel performed by manual steering by a user. The travel control method is a method comprising the steps of: receiving a user operation performed with respect to an operation tool that causes the work vehicle to execute a predetermined motion; causing the work vehicle to execute a motion corresponding to the user operation performed with respect to the operation tool; switching from autonomous travel to manual travel when a change amount relating to the operation tool corresponding to the user operation exceeds a threshold while the work vehicle is performing autonomous travel; and setting the threshold based on at least one of setting information and work information of the work vehicle.

The travel control system according to the present invention is a system that controls travel of a work vehicle that is capable of switching between autonomous travel performed by automatic steering and manual travel performed by manual steering by a user. The reception processing unit receives a user operation performed with respect to an operation tool that causes the work vehicle to execute a predetermined motion. The motion processing unit causes the work vehicle to execute a motion corresponding to the user operation performed with respect to the operation tool. The travel processing unit switches from autonomous travel to manual travel when a change amount relating to the operation tool corresponding to the user operation exceeds a threshold while the work vehicle is performing autonomous travel. The setting processing unit sets the threshold based on at least one of setting information and work information of the work vehicle.

The travel control program according to the present invention is a program that controls travel of a work vehicle that is capable of switching between autonomous travel performed by automatic steering and manual travel performed by manual steering by a user. The travel control program is a program for causing one or more processors to execute the steps of: receiving a user operation performed with respect to an operation tool that causes the work vehicle to execute a predetermined motion; causing the work vehicle to execute a motion corresponding to the user operation performed with respect to the operation tool; switching from autonomous travel to manual travel when a change amount relating to the operation tool corresponding to the user operation exceeds a threshold while the work vehicle is performing autonomous travel; and setting the threshold based on at least one of setting information and work information of the work vehicle.

### ADVANTAGEOUS EFFECTS OF INVENTION

According to the present invention, it is possible to provide a travel control method, a travel control system, and a travel control program that are capable of appropriately switching from autonomous travel to manual travel.

### BRIEF DESCRIPTION OF DRAWINGS

FIG. 1 is a block diagram illustrating a configuration of a work vehicle according to an embodiment of the present invention.
FIG. 2A is a side view illustrating an example of a work vehicle according to an embodiment of the present invention.
FIG. 2B is a top view illustrating an example of a work vehicle according to an embodiment of the present invention.
FIG. 3 is an external view illustrating an example of an operation device according to an embodiment of the present invention.
FIG. 4 is a diagram illustrating an example of a target route of a work vehicle according to an embodiment of the present invention.
FIG. 5A is a diagram illustrating an example of a route generation method according to an embodiment of the present invention.
FIG. 5B is a diagram illustrating an example of a route generation method according to an embodiment of the present invention.
FIG. 5C is a diagram illustrating an example of a route generation method according to an embodiment of the present invention.
FIG. 6A is a diagram illustrating an example of a work screen that is displayed on an operation device according to an embodiment of the present invention.
FIG. 6B is a diagram illustrating an example of a work screen that is displayed on an operation device according to an embodiment of the present invention.
FIG. 7A is a diagram illustrating an example of a setting screen that is displayed on an operation device according to an embodiment of the present invention.
FIG. 7B is a diagram illustrating an example of a setting screen that is displayed on an operation device according to an embodiment of the present invention.
FIG. 7C is a diagram illustrating an example of a setting screen that is displayed on an operation device according to an embodiment of the present invention.
FIG. 8A is a diagram illustrating an example of a work screen that is displayed on an operation device according to an embodiment of the present invention.
FIG. 8B is a diagram illustrating an example of a work screen that is displayed on an operation device according to an embodiment of the present invention.
FIG. 9 is a flowchart illustrating an example of the procedure of travel control processing that is executed in a work vehicle according to an embodiment of the present invention.
FIG. 10 is a diagram illustrating an example of a work screen that is displayed on an operation device according to an embodiment of the present invention.
FIG. 11 is a diagram illustrating an example of a work screen that is displayed on an operation device according to an embodiment of the present invention.
FIG. 12 is a diagram illustrating an example of a setting screen that is displayed on an operation device according to another embodiment of the present invention.
FIG. 13 is a diagram illustrating an example of a setting screen that is displayed on an operation device according to another embodiment of the present invention.

### DESCRIPTION OF EMBODIMENTS

The embodiment described below is a specific example that embodies the present invention, and is not intended to limit the technical scope of the present invention.

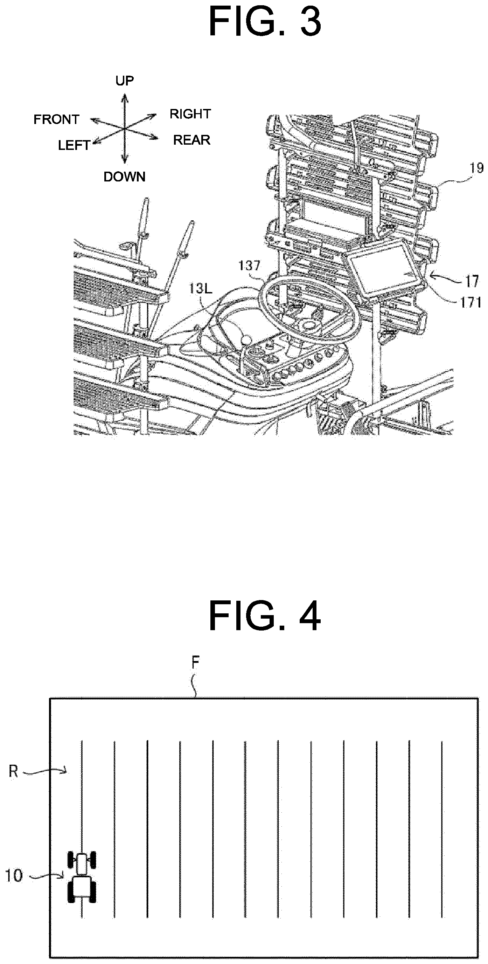

The autonomous travel system according to an embodiment of the present invention includes a work vehicle 10, a satellite (not shown), and a base station (not shown). In the present embodiment, a case where the work vehicle 10 is a rice transplanter will be described as an example. Note that, as other embodiments, the work vehicle 10 may be a tractor, a combine, a construction machine, a snowplow, or the like. The work vehicle 10 performs predetermined work (such as planting work) while traveling along a target route R in a field F (see FIG. 4) according to operations performed by an operator (user). More specifically, the work vehicle 10 performs straight travel on the target route R according to automatic steering and makes turns according to manual steering (driving operations) performed by the operator. The work vehicle 10 travels in the field F and performs work while switching between autonomous travel on the straight routes and manual travel on the turning routes. The target route R may be generated in advance and stored as route data based on an operation by the operator.

The work vehicle 10, for example, travels in the field F illustrated in FIG. 4 by repeating straight travel and turning travel until the work is completed. The plurality of straight routes are substantially parallel to each other. The target route R illustrated in FIG. 4 is an example, and the target route R is appropriately determined according to the size of the work vehicle 10, the size of the work machine 14, the content of the work, the shape of the field F, and the like.

The autonomous travel system may include an operation terminal (such as a tablet terminal or a smartphone) that is operated by the operator. The operation terminal can communicate with the work vehicle 10 via a communication network such as a cellular telephone line network, a packet line network, or a wireless LAN. For example, the operator operates the operation terminal and performs operations that register various types of information (such as work vehicle information, field information, and work information) and the like. Furthermore, the operator is able to confirm, at a position away from the work vehicle 10, the travel status, the work status, and the like of the work vehicle 10 by a travel path that is displayed on the operation terminal.

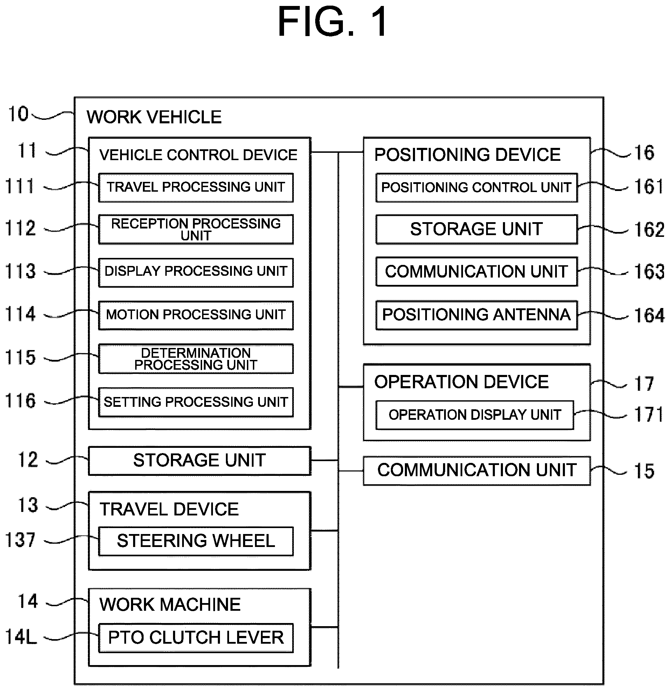

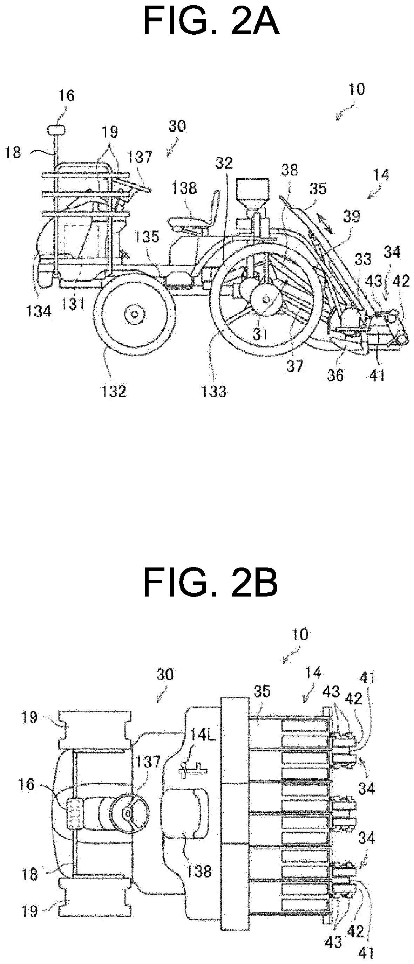

[Work Vehicle 10]As illustrated in FIGS. 1 and 2, the work vehicle 10 is provided with a vehicle control device 11, a storage unit 12, a travel device 13, a work machine 14, a communication unit 15, a positioning device 16, and an operation device 17. The vehicle control device 11 is electrically connected to the storage unit 12, the travel device 13, the work machine 14, the positioning device 16, the operation device 17, and the like. The vehicle control device 11 and the positioning device 16 may be capable of performing wireless communication. Furthermore, the vehicle control device 11 and the operation device 17 may be capable of performing wireless communication.

First, a rice transplanter, which is an example of the work vehicle 10, will be described with reference to FIGS. 2A and 2B. FIG. 2A is a side view of the work vehicle 10 (rice transplanter), and FIG. 2B is a plan view of the work vehicle 10. The work vehicle 10 includes a vehicle body portion 30, a pair of right and left front wheels 132, a pair of right and left rear wheels 133, a work machine 14 (planting unit), and the like.

An engine (drive unit) 131 is disposed inside a hood 134 arranged in a front portion of the vehicle body portion 30. The power generated by the engine 131 is transmitted to the front wheels 132 and the rear wheels 133 via a transmission case 135. The power transmitted via the transmission case 135 is also transmitted to the work machine 14 via a PTO shaft 37 disposed in a rear portion of the vehicle body portion 30. The PTO shaft 37 is configured such that the power is transmitted to it via a PTO clutch (working clutch) (not shown). A driver's seat 138 on which the operator boards is provided in a position between the front wheels 132 and the rear wheels 133 in a front-rear direction of the vehicle body portion 30.

Operation tools such as a steering wheel 137 (see FIG. 3), a speed change lever 13L (see FIG. 3), and a PTO clutch lever 14L (see FIG. 2B) are arranged in front of the driver's seat 138. The steering wheel 137 is an operation tool for changing the steering angle of the work vehicle 10. The speed change lever 13L is configured so that positions that at least include "forward", "backward", "neutral" and "seedling transfer" can be selected. When the speed change lever 13L is operated to the "forward" position, the power is transmitted so that the front wheels 132 and the rear wheels 133 rotate in a direction that causes the work vehicle 10 to move forward. When the speed change lever 13L is operated to the "backward" position, the power is driven so that the front wheels 132 and the rear wheels 133 rotate in a direction that causes the work vehicle 10 to move backward. When the speed change lever 13L is operated to the "neutral" position, the power transmitted to the front wheels 132 and the rear wheels 133 is cut off. When the speed change lever 13L is operated to the "seedling transfer" position, the power transmitted to the front wheels 132, the rear wheels 133 and the PTO shaft 37 is cut off. Furthermore, by operating the PTO clutch lever 14L, switching is possible between a transmission state in which the PTO clutch transmits power to the PTO shaft 37 (that is, the work machine 14) and a cut-off state in which the PTO clutch does not transmit power to the PTO shaft 37 (that is, the work machine 14).

The work machine 14 is joined to the rear of the vehicle body portion 30 via a raising/lowering link mechanism 31. The raising/lowering link mechanism 31 is configured by a parallel link structure including a top link 39, a lower link 38, and the like. A raising/lowering cylinder 32 is joined to the lower link 38. The entire work machine 14 may be vertically raised and lowered by extending and contracting the raising/lowering cylinder 32. As a result, the height of the work machine 14 may be changed between a lowered position in which the work machine 14 is lowered to perform planting work, and a raised position in which the work machine 14 is raised and does not perform planting work. The raising/lowering cylinder 32 is a hydraulic cylinder, but an electric cylinder may also be used. Furthermore, a configuration may be used in which the work machine 14 is raised and lowered by an actuator other than a cylinder.

The work machine 14 (planting unit) includes a planting input case 33, a plurality of planting units 34, a seedling stand 35, a plurality of floats 36, and the like.

Each of the planting units 34 includes a planting transmission case 41 and a rotary case 42. The power is transmitted to the planting transmission case 41 via the PTO shaft 37 and the planting input case 33. Each of the planting transmission cases 41 has the rotary case 42 mounted on both sides thereof in a vehicle width direction. Two planting claws 43 are mounted side-by-side on each of the rotary cases 42 in the forward direction of the work vehicle 10. The two planting claws 43 perform planting of a single row.

As illustrated in FIG. 2A, the seedling stand 35 is disposed in front of and above the planting units 34 and is configured such that seedling mats can be placed thereon. The seedling stand 35 is configured to be laterally movable (slidable in the lateral direction) in a reciprocating manner. Furthermore, the seedling stand 35 is configured so as to be capable of intermittently and vertically conveying the seedling mats to the downward side at the ends of the reciprocating movement of the seedling stand 35. This configuration enables the seedling stand 35 to supply seedlings from the seedling mats to each of the planting units 34. Accordingly, the work vehicle 10 may successively supply seedlings to each of the planting units 34 to continuously perform planting of the seedlings.

The float 36 illustrated in FIG. 2A is provided in a lower portion of the work machine 14 so that the lower surface is disposed so as to come into contact with the ground surface. The float 36 comes into contact with the ground to level the rice field surface before seedlings are planted. Furthermore, the float 36 is provided with a float sensor (not shown) that detects a swing angle of the float 36. The swing angle of the float 36 corresponds to the distance between the rice field surface and the work machine 14. The work vehicle 10 causes the raising/lowering cylinder 32 to move based on the swing angle of the float 36 and raises and lowers the work machine 14 up and down so as to maintain work machine 14 at a constant height above the ground.

Spare seedling stands 19 are provided outside of the hood 134 in the vehicle width direction, and are capable of being loaded with a seedling box that accommodates spare mat seedlings. The upper portions of the pair of left and right spare seedling stands 19 are joined to each other by a coupling frame 18 that extends in the vertical direction and the vehicle width direction. The positioning device 16 is disposed on the center of the coupling frame 18 in the vehicle width direction.

As shown in FIG. 1, the positioning device 16 includes a positioning control unit 161, a storage unit 162, a communication unit 163, a positioning antenna 164, and the like.

The positioning control unit 161 is a computer system provided with one or more processors and storage memory, such as a non-volatile memory and a RAM. The storage unit 162 is a non-volatile memory or the like that stores a positioning control program for causing the positioning control unit 161 to execute positioning processing, and data such as positioning information and movement information. For example, the positioning control program is non-transiently recorded on a computer-readable recording medium such as a CD or a DVD, which is read by a predetermined reading device (not shown) and then stored in the storage unit 162. Note that, the positioning control program may be downloaded from a server (not shown) to the positioning device 16 via a communication network and then stored in the storage unit 162.

The communication unit 163 is a communication interface for connecting the positioning device 16 to a communication network in a wired or wireless fashion, and executing data communication according to a predetermined communication protocol with an external apparatus such as a base station server via the communication network.

The positioning antenna 164 is an antenna that receives radio waves (a GNSS signal) transmitted from a satellite.

The positioning control unit 161 calculates the current position of the work vehicle 10 based on the GNSS signal that the positioning antenna 164 receives from the satellite. For example, in a case where the work vehicle 10 travels autonomously in the field F, when the positioning antenna 164 receives radio waves (such as a transmission time and orbit information) transmitted from each of a plurality of satellites, the positioning control unit 161 calculates a distance between the positioning antenna 164 and each satellite, and calculates the current position (latitude and longitude) of the work vehicle 10 based on the calculated distances. Alternatively, the positioning control unit 161 may perform positioning using the real-time kinematic method (the RTK-GNSS positioning method (RTK method)), which calculates the current position of the work vehicle 10 using correction information corresponding to a base station (reference station) near the work vehicle 10. In this way, the work vehicle 10 uses positioning information based on the RTK method to perform autonomous travel. The current position of the work vehicle 10 may be the same position as the positioning position (for example, the position of the positioning antenna 164), or may be a position that is offset from the positioning position.

The communication unit 15 is a communication interface for connecting the work vehicle 10 to a communication network in a wired or wireless fashion, and executing data communication according to a predetermined communication protocol with an external apparatus (such as an operation terminal) via the communication network.

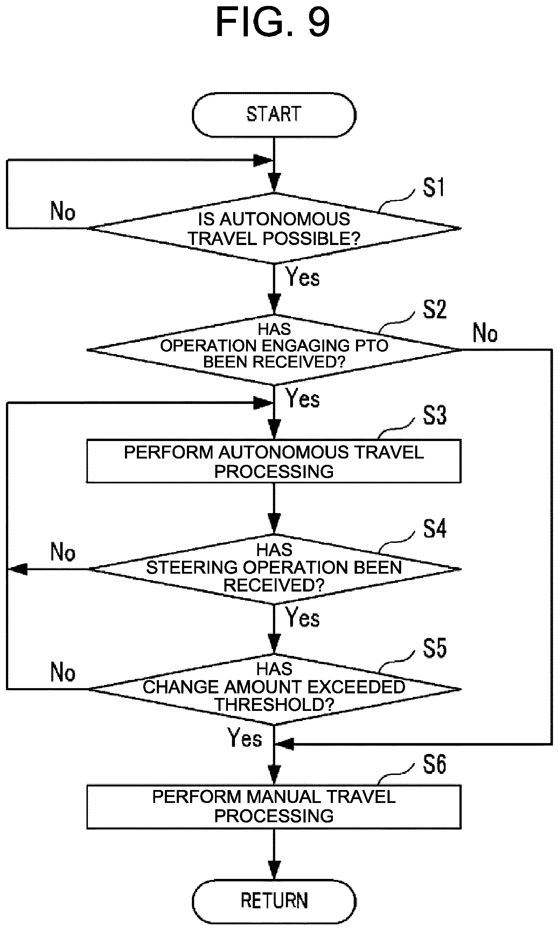

The storage unit 12 is a non-volatile storage unit such as a hard disk drive (HDD) or a solid state drive (SSD) that stores various types of information. The storage unit 12 stores control programs such as a travel control program for causing the vehicle control device 11 to execute travel control processing (see FIG. 9) including autonomous travel processing and manual traveling processing. For example, the travel control program is non-transiently recorded in a computer-readable recording medium, such as a CD or a DVD, and is read by a predetermined reading device (not shown) and then stored in the storage unit 12. The travel control program may be downloaded from a server (not shown) to the work vehicle 10 via a communication network and then stored in the storage unit 12. The storage unit 12 may also store data of the target route R that is generated in the operation device 17.

The operation device 17 is an apparatus operated by the operator that boards the work vehicle 10, and displays various types of information and receives operations from the operator. More specifically, the operation device 17 displays various setting screens and receives various setting operations from the operator, and displays information relating to the work vehicle 10 during travel.

The vehicle control device 11 includes a control apparatuses such as a CPU, a ROM, and a RAM. The CPU is a processor that executes various types of arithmetic processing. The ROM is a non-volatile storage unit that stores in advance control programs such as a BIOS and an OS for causing the CPU to execute various types of arithmetic processing. The RAM is a volatile or non-volatile storage unit that stores various types of information, and is used as a temporary storage memory (work area) for the various types of processing executed by the CPU. Further, the vehicle control device 11 controls the work vehicle 10 as a result of the CPU executing the various control programs stored in advance in the ROM or the storage unit 12. Moreover, the vehicle control device 11 executes various types of processing according to the travel control program using the CPU.

As shown in FIG. 1, the vehicle control device 11 includes various processing units such as a travel processing unit 111, a reception processing unit 112, a display processing unit 113, a motion processing unit 114, a determination processing unit 115, a setting processing unit 116, and the like. The vehicle control device 11 functions as the various processing units as a result of the CPU executing various types of processing according to the travel control program. Furthermore, some or all of the processing units may be configured by an electronic circuit. The travel control program may be a program for causing a plurality of processors to function as the processing units.

The travel processing unit 111 controls the travel of the work vehicle 10. More specifically, when the travel mode of the work vehicle 10 is manual travel (manual travel mode), the travel processing unit 111 causes the work vehicle 10 to perform manual travel based on operations (manual steering) performed by the operator. For example, the travel processing unit 111 acquires operation information corresponding to driving operations performed by the operator, such as steering wheel operations, speed change operations, shift operations, accelerator operations, and brake operations, and causes the travel device 13 to execute travel motions based on the operation information.

Furthermore, when the travel mode of the work vehicle 10 is autonomous travel (autonomous travel mode), the travel processing unit 111 causes the work vehicle 10 to perform autonomous travel based on position information (positioning information) indicating the current position of the work vehicle 10, which is positioned by the positioning control unit 161. For example, when the work vehicle 10 satisfies an autonomous travel start condition and a travel start instruction is acquired from the operator, the travel processing unit 111 causes the work vehicle 10 to start performing autonomous travel based on the positioning information. Moreover, the travel processing unit 111 causes the work vehicle 10 to perform autonomous travel according to the target route R (straight route) generated in advance.

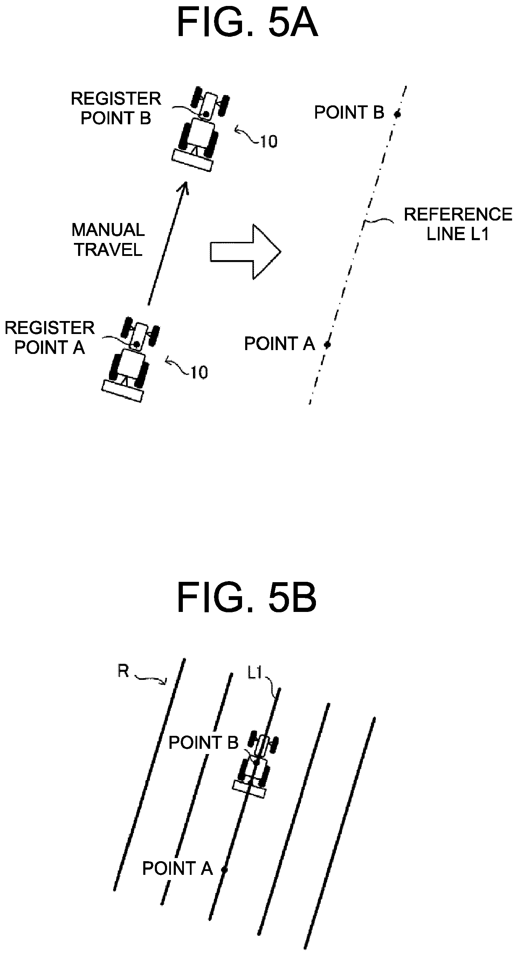

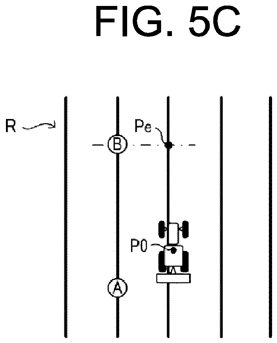

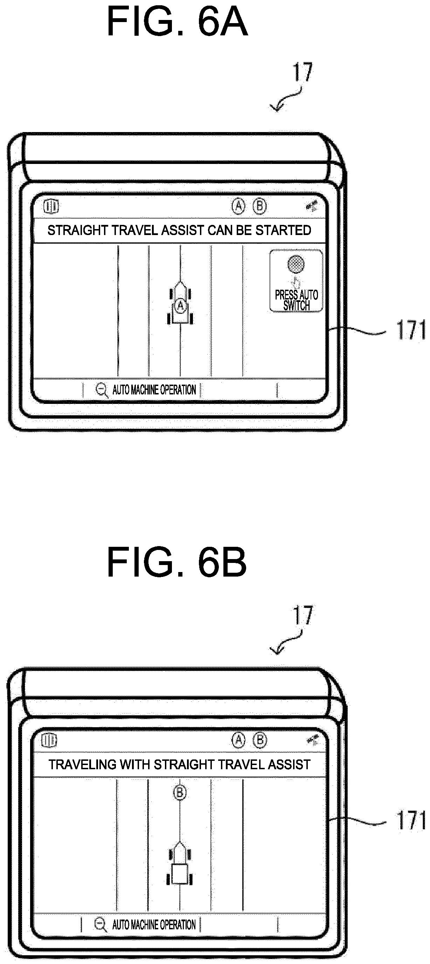

Here, a specific example of autonomous travel according to the present embodiment will be described with reference to FIGS. 5 and 6. In the present embodiment, the work vehicle 10 performs autonomous travel along the straight routes in the field F illustrated in FIG. 4. For example, the target route R for autonomous travel is generated in the operation device 17.

First, the operator sets a reference line L1 for generating the straight routes representing the target route R. For example, the operator causes the work vehicle 10 to perform manual travel in an arbitrary position in the field F (such as an outer peripheral end portion) in a direction (target direction) in which travel and work is to be performed by the work vehicle 10. More specifically, the operator causes the work vehicle 10 to perform straight travel by manual steering in a direction that is parallel to a work direction (for example, a planting direction) that is traveled when the work vehicle 10 is working in the work area. Then, the operator performs two operations (for example, touch operations) on the operation device 17 at arbitrary positions (such as the front and rear end portions of the work area) while causing the work vehicle 10 to perform manual travel in an intended target direction. The operation device 17 registers a position (point A) of the work vehicle 10 as a result of the first operation performed by the operator, and registers a position (point B) of the work vehicle 10 as a result of the second operation performed by the operator. When the operation device 17 acquires position information of point A and point B, it sets a straight line that passes through point A and point B as the reference line L1 (see FIG. 5A). The operation device 17 may enable registration of point B when the work vehicle 10 travels a predetermined distance (such as 5 m) after registering point A. In this way, a more accurate reference line L1 can be set.

The operation device 17 generates a travel route (target route R) including the reference line L1 and a plurality of straight lines that are parallel to the reference line L1. For example, the operation device 17 generates the plurality of straight lines at equally-spaced intervals to the left and right of the reference line L1 based on a work width (lateral width of the work machine 14) and a lap width (overlapping width with an adjacent worked area) that are set in advance (see FIG. 5B). The operation device 17 registers the generated target route R in the storage unit 12 and causes the operation display unit 171 to display the generated target route R.

After the target route R has been generated, in a case where the work vehicle 10 performs straight travel by automatic steering in the field F, the operator views the target route R displayed on the operation device 17 while moving the work vehicle 10 by manual steering such that the direction (azimuth) of the work vehicle 10 is within a predetermined range (predetermined azimuth) with respect to the direction of the reference line L1 (such that an autonomous travel start condition is satisfied) (see FIG. 5C).

FIG. 6A illustrates an operation screen that indicates the work vehicle 10 has satisfied an autonomous travel start condition and is capable of performing autonomous travel. When the work vehicle 10 satisfies the autonomous travel start condition, the operation device 17 causes the operation display unit 171 to display the operation screen illustrated in FIG. 6A. When the work vehicle 10 is in a state in which autonomous travel is possible, the operator issues a travel start instruction by pressing an autonomous travel button (not shown) on the operation display unit 171. When the operation device 17 receives the travel start instruction from the operator, the travel processing unit 111 of the vehicle control device 11 starts automatic steering of the work vehicle 10 along the straight route that is closest to the current position P0 of the work vehicle 10 (see FIG. 5C). In this way, the travel processing unit 111 causes the work vehicle 10 to perform autonomous travel by automatic steering along a straight route.

FIG. 6B illustrates a display screen that is displayed while the work vehicle 10 is performing autonomous travel. When the work vehicle 10 starts to perform autonomous travel, the operation device 17 causes the operation display unit 171 to display the display screen illustrated in FIG. 6B. The operation device 17 displays the straight routes, the worked area (work status), and the like on the display screen.

As described above, the operation device 17 generates the target route R for autonomous travel, and the vehicle control device 11 causes the work vehicle 10 to execute autonomous travel along the target route R.

Furthermore, when the work vehicle 10 performs straight travel by automatic steering and approaches a terminal end Pe (intersection between a line perpendicular to the reference line L1 passing through point B and the straight route (straight line)) corresponding to point B of the reference line L1 (see FIG. 5C), the operation device 17 notifies the operator of guidance information (by a message display or audio guidance) indicating that the terminal end Pe is approaching. The automatic steering ends when the operator confirms the guidance information.

Moreover, the travel processing unit 111 switches the travel mode to manual travel when the work vehicle 10 reaches the terminal end Pe (terminal end of the straight route). The travel processing unit 111 switches the travel mode to manual travel in response to an operation performed by the operator. When the travel mode is switched to manual travel, for example, the operator performs turning travel (manual travel) of the work vehicle 10 using manual steering.

As described above, the travel processing unit 111 causes the work vehicle 10 to perform autonomous travel on straight routes (target route R) by automatic steering and perform manual travel on turning routes by manual steering.

However, a technique is conventionally known that switches from autonomous travel to manual travel when a steering device (such as the steering wheel 137) is operated by the operator while the work vehicle 10 is performing autonomous travel. As a result, it is possible to simplify the operation of switching from autonomous travel to manual travel. However, because the conventional technique uses a configuration in which switching occurs from autonomous travel to manual travel by detecting a steering state of a steering device, there is a problem that switching to manual travel occurs while the work vehicle 10 is performing autonomous travel when the steering direction of the steering device changes in a location that is not intended by the operator. In contrast, as described below, the work vehicle 10 according to the present embodiment is provided with a configuration in which it is possible to appropriately switch from autonomous travel to manual travel.

More specifically, the reception processing unit 112 receives an operation performed by the operator with respect to operation tools that execute predetermined motions of the work vehicle 10. The operation tools include the steering wheel 137 (steering device), the speed change lever 13L (speed change device), the PTO clutch lever 14L, a raising/lowering lever (raising/lowering device), a shift lever, an accelerator, and the like.

The motion processing unit 114 causes the work vehicle 10 to execute motions corresponding to operations performed by the operator with respect to the operation tools. For example, the motion processing unit 114 controls the travel direction (steering angle) of the work vehicle 10 according to operations (steering operations) performed by the operator with respect to the steering wheel 137. Furthermore, for example, the motion processing unit 114 controls the transmission of power to the work machine 14 according to operations (ON operations and OFF operations) performed by the operator with respect to the PTO clutch lever 14L. Moreover, for example, the motion processing unit 114 controls the raising and lowering motion of the work machine 14 according to operations (raising/lowering operations) performed by the operator with respect to the raising/lowering lever.

The travel processing unit 111 switches between autonomous travel and manual travel of the work vehicle 10 based on operations performed by the operator with respect to the operation tools. More specifically, the travel processing unit 111 starts autonomous travel of the work vehicle 10 when a first operation performed by the operator with respect to an operation tool is received, and stops the autonomous travel of the work vehicle 10 and switches to manual travel when a second operation performed by the operator with respect to an operation tool is received. For example, when the operator uses the PTO clutch lever 14L to perform an operation that engages the PTO clutch (an example of the first operation) and the operation is received by the reception processing unit 112, the travel processing unit 111 causes the work vehicle 10 start performing autonomous travel. In addition, for example, when the operator steers the steering wheel 137 by a predetermined amount (an example of the second operation) and the operation is received by the reception processing unit 112, the travel processing unit 111 stops the autonomous travel of the work vehicle 10 and switches to manual travel.

In this way, when the operator performs an operation that engages the PTO clutch, the motion processing unit 114 shifts the work machine 14 to a drive state (transmission state), and the travel processing unit 111 also causes the work vehicle 10 to start performing autonomous travel. On the other hand, when the operator steers the steering wheel 137 by a predetermined amount, the motion processing unit 114 changes the travel direction of the work vehicle 10, and the travel processing unit 111 causes the work vehicle 10 to perform manual travel (stop autonomous travel).

When the vehicle control device 11 receives the first operation performed by the operator with respect to a predetermined operation tool, it causes the work vehicle 10 to execute a first motion corresponding to the operation tool and start performing autonomous travel. When the vehicle control device 11 receives the second operation performed by the operator with respect to an operation tool, it causes the work vehicle 10 to execute a second motion corresponding to the operation tool and start performing manual travel (stop autonomous travel). That is, in the work vehicle 10 according to the present embodiment, the operation tools may be provided with a function that receives an instruction for a motion that is originally handled by the operation tool, as well as a function that receives an instruction to switch between autonomous travel and manual travel (travel mode switching function). Furthermore, the vehicle control device 11 may switch between autonomous travel and manual travel in conjunction with the operations performed by the operator with respect to the operation tools.

According to the configuration described above, for example, the operator is able to switch from manual travel to autonomous travel and perform work using the work machine 14 by operating the PTO clutch lever 14L when performing work on the work route (straight route). Moreover, the operator is able to switch from autonomous travel to manual travel and perform a turning motion of the work vehicle 10 by operating the steering wheel 137 when turning travel of the work vehicle 10 is performed on a non-work route (turning route). Therefore, for example, the operability can be improved because an operation in which the operator presses a button that starts and ends autonomous travel can be omitted.

Next, a specific configuration of the second operation for switching from autonomous travel to manual travel will be described. The operator performs the second operation when switching the work vehicle 10 from autonomous travel to manual travel.

More specifically, the determination processing unit 115 determines whether or not a change amount that relates to the operation tool corresponding to the second operation performed by the operator exceeds a threshold while the work vehicle 10 is performing autonomous travel. The travel processing unit 111 switches from autonomous travel to manual travel when the determination processing unit 115 determines that the change amount relating to the operation tool has exceeded the threshold.

For example, when the work vehicle 10 performs autonomous travel on a straight route of the target route R and issues a notification of guidance information indicating that the terminal end Pe of the straight route (see FIG. 5C) is approaching, the operator decreases the vehicle speed and steers the steering wheel 137 in the direction of the next straight route. The determination processing unit 115 determines whether or not the change amount of the operation direction and the operation time of the steering wheel 137 has exceeded the threshold.

For example, the travel processing unit 111 determines that the change amount of the steering wheel 137 has exceeded the threshold when the steering direction set by the operator with respect to the steering wheel 137 is a different direction to the steering direction set by the automatic steering according to autonomous travel, and a predetermined time has elapsed since steering in the different direction began.

Here, the setting processing unit 116 sets the threshold of the change amount based on setting information of the work vehicle 10. More specifically, the setting processing unit 116 sets the threshold according to the vehicle speed of the work vehicle 10. For example, the setting processing unit 116 sets a first threshold when the vehicle speed of the work vehicle 10 is a high speed, and sets a second threshold that is lower than the first threshold when the vehicle speed of the work vehicle 10 is a low speed. The vehicle speed of the work vehicle 10 is an example of setting information of the present invention.

In this case, when the work vehicle 10 is performing autonomous travel at a high speed (first vehicle speed), the travel processing unit 111 switches from autonomous travel to manual travel when the change amount of the steering wheel 137 corresponding to an operation by the operator exceeds the first threshold. As a result, for example, when the work vehicle 10 is performing autonomous travel while working on a straight route of the target route R, autonomous travel is maintained without switching to manual travel even when the operator slightly steers the steering wheel 137.

In contrast, when the work vehicle 10 is performing autonomous travel at a low speed (second vehicle speed), the travel processing unit 111 switches from autonomous travel to manual travel when the change amount of the steering wheel 137 corresponding to an operation by the operator exceeds the second threshold (second threshold < first threshold). Consequently, for example, when the terminal end Pe of the straight route of the target route R is approaching and the vehicle speed is switched to a low speed by a deceleration operation performed by the operator (or automatic deceleration processing), it is possible to switch from autonomous travel to manual travel as a result of the operator slightly steering the steering wheel 137. The change amount of the steering wheel 137 is an example of the change amount of an operation tool of the present invention.

In this way, the vehicle control device 11 is provided with a configuration in which the threshold of the change amount for switching from autonomous travel to manual travel is not fixed to a constant value, and changes according to the vehicle speed. According to this configuration, when the work vehicle 10 is working while performing autonomous travel on the work route according to the target route R, it is possible to prevent switching to manual travel at a location that is not intended by the operator. Furthermore, according to the configuration described above, it is possible to automatically switch to manual travel due to the operator lowering the vehicle speed and performing a turning operation (steering of the steering wheel 137) in order to move the work vehicle 10 to the next work route. Therefore, it is possible to appropriately switch from autonomous travel to manual travel. Also, the operability when switching travel modes can be improved.

As another embodiment, the setting processing unit 116 may set the threshold of the change amount to a smaller value as the vehicle speed of the work vehicle 10 decreases. For example, the setting processing unit 116 may set the threshold such that it decreases stepwise or decreases gradually as the vehicle speed of the work vehicle 10 decreases.

The change amount of the steering wheel 137 may be the change amount of at least one of the steering direction, the operation time, the operation amount (steering angle), and the operation torque of the steering wheel 137. For example, autonomous travel is stopped or switching to manual travel occurs when the operation amount (steering angle) of the steering wheel 137 by the operator exceeds the first threshold while the work vehicle 10 is performing autonomous travel at a high speed. Further, switching from autonomous travel to manual travel occurs when the operation amount (steering angle) of the steering wheel 137 by the operator exceeds the second threshold that is lower than the first threshold while the work vehicle 10 is performing autonomous travel at a low speed.

Furthermore, for example, switching from autonomous travel to manual travel occurs when the operation torque of the steering wheel 137 by the operator exceeds the first threshold while the work vehicle 10 is performing autonomous travel at a high speed. Also, switching from autonomous travel to manual travel occurs when the operation torque of the steering wheel 137 by the operator exceeds the second threshold that is lower than the first threshold while the work vehicle 10 is performing autonomous travel at a low speed. As a result, for example, when autonomous travel is being performed while working on the straight route of the target route R, autonomous travel is maintained without switching to manual travel even when the operator steers the steering wheel 137 with a light force (operation load). In contrast, for example, when the terminal end Pe of the straight route of the target route R is approaching and the vehicle speed is switched to a low speed by a deceleration operation or the like performed by the operator, it is possible to switch from autonomous travel to manual travel as a result of the operator steering the steering wheel 137 with a light force. In the case of a configuration where the travel mode is switched by the operation torque, the vehicle control device 11 is capable of executing switching processing of the travel mode by utilizing the detection result of a torque sensor that detects the operation torque.

The vehicle control device 11 may switch from autonomous travel to manual travel based on the change amount of information relating to at least one of the steering direction, the operation time, the operation amount (steering angle), and the operation torque of the steering wheel 137, and a threshold corresponding to the information, and may also switch from autonomous travel to manual travel based on the change amount of a plurality of information and the thresholds corresponding to each of the information. The change amount of the present invention may be a physical change amount (such as a movement amount) of the operation tool, or may be a change amount of information (the steering direction, the operation time, the operation amount, or the operation torque) from the operation tool.

As another embodiment, the operation tool may be the speed change lever 13L or a speed change pedal (not shown). More specifically, the vehicle control device 11 may switch from autonomous travel to manual travel when the change amount of the speed change lever 13L exceeds a threshold. For example, the vehicle control device 11 may switch from autonomous travel to manual travel when the operation amount of the speed change lever 13L or a deceleration amount of the vehicle speed due to the speed change lever 13L exceeds a threshold corresponding to the vehicle speed. As a result, for example, it is possible to maintain autonomous travel when the work vehicle 10 is decelerated from a high speed to a medium speed, and switch to manual travel when the work vehicle 10 is decelerated from a high speed to a low speed. Furthermore, as another embodiment, the vehicle control device 11 may switch from autonomous travel to manual travel under the condition that the vehicle speed of the work vehicle 10 has become less than or equal to a predetermined vehicle speed. The speed change lever 13L is an example of an operation tool of the present invention, and the change amount of the speed change lever 13L is an example of the change amount of an operation tool of the present invention.

Moreover, as another embodiment, the vehicle control device 11 may switch from autonomous travel to manual travel when the change amount of the raising/lowering lever of the work machine 14 exceeds a threshold. For example, the vehicle control device 11 may switch from autonomous travel to manual travel when the operation amount of the raising/lowering lever or a lowering amount of the work machine 14 due to the raising/lowering lever exceeds a threshold corresponding to the vehicle speed. As a result, for example, it is possible to maintain autonomous travel when work vehicle 10 lowers the work machine 14 at a high speed, and switch to manual travel when the work vehicle 10 lowers the work machine 14 at a low speed. The raising/lowering lever is an example of an operation tool of the present invention, and the change amount of the raising/lowering lever (raising/lowering amount of the work machine 14) is an example of the change amount of an operation tool of the present invention.

As described above, when the travel mode is switched from autonomous travel to manual travel, the operator causes the work vehicle 10 to perform turning travel (manual travel) by manual steering. Then, when the operator positions the work vehicle 10 at a work start position of the next work route (straight route) and engages the PTO clutch using the PTO clutch lever 14L, the motion processing unit 114 shifts the work machine 14 to a drive state (transmission state), and the travel processing unit 111 switches to autonomous travel and causes the work vehicle 10 to perform autonomous travel according to the target route R. That is, the travel processing unit 111 switches from manual travel to autonomous travel when the work vehicle 10 receives an operation that drives the work machine 14 while performing manual travel.

Here, when switching occurs from manual travel to autonomous travel, the setting processing unit 116 changes the threshold of the change amount according to the vehicle speed of the work vehicle 10. More specifically, the setting processing unit 116 changes from the second threshold used when switching occurs to manual travel to the first threshold used during high-speed travel of the work route. As another embodiment, the setting processing unit 116 may change the threshold such that it increases stepwise or increases gradually from the second threshold to the first threshold according to an acceleration amount of the vehicle speed of the work vehicle 10 after switching to autonomous travel.

When the travel processing unit 111 receives an operation from the operator that engages the PTO clutch, it may cause the work vehicle 10 to travel a preset distance (substantially less than 6 m), and may further start autonomous travel after a fixed time (about 1 second) has elapsed after issuing a notification of information indicating that a switch to autonomous travel will occur. As a result, the operator is able to correct the position, the azimuth, and the like of the work vehicle 10 until autonomous travel starts, which more readily ensures their own safety, and enables the operability and safety to be improved.

As another embodiment, the reception processing unit 112 may receive from the operator a setting operation that sets whether or not a first function that executes a predetermined motion corresponding to an operation performed by the operator with respect to an operation tool, and second function (travel mode switching function) that switches between autonomous travel and manual travel in response to an operation performed by the operator with respect to an operation tool are linked. That is, the work vehicle 10 may have a configuration in which the operator is able to select whether or not the travel mode switching function is linked to motions performed with respect to the operation tools.

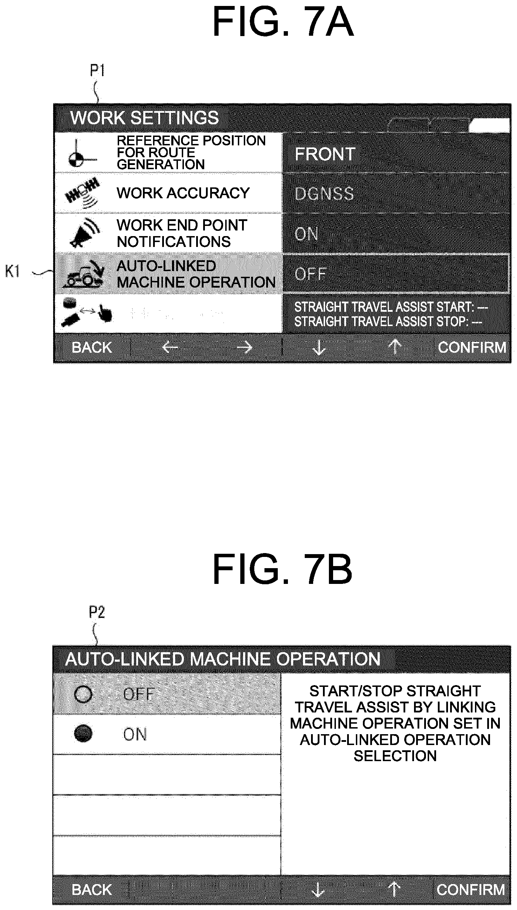

For example, when the operator selects a setting menu on a menu screen (not shown) displayed on the operation display unit 171 of the operation device 17, the display processing unit 113 displays the setting screen P1 shown in FIG. 7A. Among the plurality of setting items displayed on the setting screen P1, the item K1 displayed as "auto-linked machine operation" is an item for setting whether or not to link the travel mode switching function. When the item K1 is "OFF", the travel mode switching function is not linked to operations performed with respect to the operation tools. In this case, the operator presses an autonomous travel button to start autonomous travel.

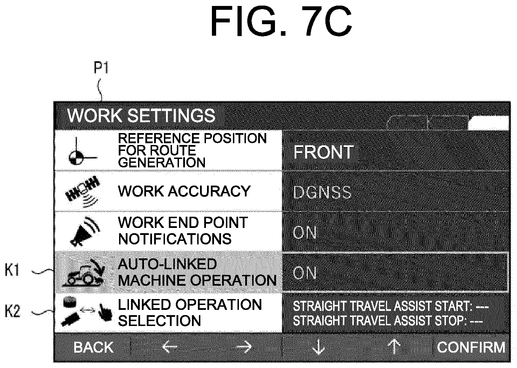

When the travel mode switching function is to be linked to operations performed with respect to the operation tools, the operator selects the item K1 (presses a confirmation button) on the setting screen P1. When the operator selects the item K1, the display processing unit 113 displays the setting screen P2 shown in FIG. 7B. When the operator selects "ON" on the setting screen P2, the reception processing unit 112 sets the travel mode switching function to ON, and the display processing unit 113 updates the item K1 on the setting screen P1 to "ON" (see FIG. 7C). This links the travel mode switching function to operations performed with respect to the operation tools.

When the item K1 is set to "ON", the travel mode switching function is linked to operations performed with respect to the operation tools. In this case, autonomous travel is started as a result of the operator performing an operation that engages the PTO clutch lever 14L, and manual travel is started (autonomous travel is stopped) as a result of the operator performing a steering operation of the steering wheel 137 until the change amount exceeds the threshold.

According to the configuration described above, it is possible for the operator to select whether or not the travel mode switching function is linked to operation performed with respect to the operation tools. For example, when the operator wishes to issue an autonomous travel start instruction by using an autonomous travel button, the operator is able to set the item K1 to "OFF" (see FIG. 7A) and not link the travel mode switching function. On the other hand, when the operator wishes to issue an autonomous travel start instruction by linking the operations of the operation tools, the operator is able to set the item K1 to "ON" (FIG. 7C) and link the travel mode switching function.

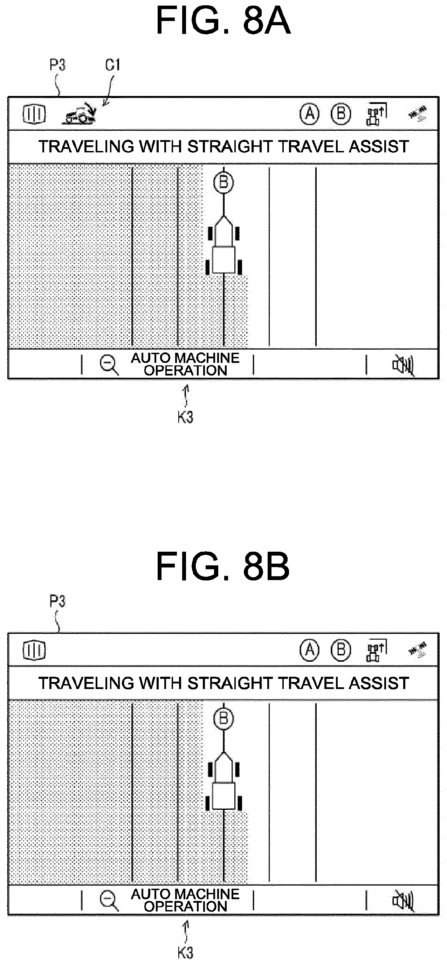

Furthermore, the display processing unit 113 may display information on a work screen P3 that indicates whether or not the travel mode switching function is linked to operation performed with respect to the operation tools. FIGS. 8A and 8B illustrate an example of the work screen P3 displayed on the operation display unit 171. When "auto-linked machine operation" on the setting screen P1 is set to "ON" (see FIG. 7C) and the travel mode switching function is linked, as shown in FIG. 8A, the display processing unit 113 causes an icon image C1 that indicates the travel mode switching function is linked to be displayed on the work screen P3 while the work vehicle 10 is traveling. On the other hand, when "auto-linked machine operation" on the setting screen P1 is set to "OFF" (see FIG. 7A) and the travel mode switching function is not linked, as shown in FIG. 8B, the display processing unit 113 does not display the icon image C1 on the work screen P3 while the work vehicle 10 is traveling. The display processing unit 113 may cause the icon image C1 to turn on or blink when the travel mode switching function is linked, and turn off (gray out) the icon image C1 when the travel mode switching function is not linked. Furthermore, the display processing unit 113 may change the display color of the icon image C1 according to whether or not the travel mode switching function is linked.

Moreover, the reception processing unit 112 may receive an operation from the operator on the work screen P3 (see FIGS. 8A and 8B) that selects whether or not the travel mode switching function is to be linked. For example, the display processing unit 113 displays on the work screen P3 a selection portion K3 in which the operator selects whether or not the travel mode switching function is to be linked. When the operator selects the selection portion K3 on the work screen P3, the display processing unit 113 displays the setting screen P2 illustrated in FIG. 7B, and receives a selection operation from the operator. The operator is able to turn ON/OFF the linking of the travel mode switching function on the work screen P3 while confirming the work status.

In this way, the reception processing unit 112 may be configured such that a setting operation that selects whether or not the travel mode switching function is to be linked can be received both before and after the work vehicle 10 starts performing the work. Here, when work is performed in the entire field F, it is necessary to perform the work by dividing the area into a central area and a headland area. In such a case, highly accurate work is required in the headland area because of the proximity to a ridge. In this regard, according to the configuration described above, it is possible to improve the operability for the operator by turning ON the linking of the travel mode switching function in only the central area, and turning OFF the linking of the travel mode switching function in the headland area.

In addition, the work vehicle 10 may be provided with a physical switch (not shown) that accepts the setting operation. This allows the operator to easily grip the operation unit for performing the setting operation, which can improve the operability of the setting operation.

The vehicle control device 11 may determine a condition for starting autonomous travel, and perform notification processing when the condition is satisfied. Furthermore, the vehicle control device 11 may be provided with a preparation mode that waits for an autonomous travel start operation by the operator based on the determination result, and an autonomous travel priority mode that automatically starts autonomous travel without waiting for an autonomous travel start operation by the operator, and a selection operation of the preparation mode and the autonomous travel priority mode may be received from the operator. According to this configuration, when the operator selects the autonomous travel priority mode, autonomous travel is automatically started as soon as the predetermined condition is satisfied. Therefore, it is not necessary for the operator to perform the autonomous travel start operation, and the operability can be improved. Moreover, when the operator selects the preparation mode, by linking the travel mode switching function, work can be performed according to the preferences of the operator. Therefore, the operability can be further improved.

[Travel Control Processing]Hereinafter, an example of the travel control processing executed by the vehicle control device 11 will be described with reference to FIG. 9. Note that the present invention may also be interpreted as an invention of a travel control method in which the vehicle control device 11 performs part or all of the travel control processing, or as an invention of a travel control program for causing the vehicle control device 11 to perform part or all of the travel control method. Furthermore, one or more processors may execute the travel control processing.

The following is an example where the operation tools of the present invention are the PTO clutch lever 14L and the steering wheel 137, and the travel mode switching function is linked ("auto-linked machine operation: ON" is set) to the PTO clutch lever 14L and the steering wheel 137 (see FIG. 7C).

First, in step S 1, the vehicle control device 11 determines whether or not the work vehicle 10 is in a state where it is capable of performing autonomous travel. For example, the vehicle control device 11 determines that the work vehicle 10 is in a state where it is capable of performing autonomous travel when an autonomous travel start condition is met, such as the azimuth of the work vehicle 10 being within a predetermined azimuth range. When the vehicle control device 11 determines that the work vehicle 10 is in a state where it is capable of performing autonomous travel (S 1: Yes), it shifts the processing to step S2. The vehicle control device 11 waits until the work vehicle 10 is in a state where it is capable of performing autonomous travel (S1: No). In step S1, the work vehicle 10 moves to a position that satisfies the autonomous travel start condition according to manual steering by the operator in a state where the PTO clutch is not engaged (a state where power to the work machine 14 is shut off).

Furthermore, when the work vehicle 10 is in a state where it is capable of performing autonomous travel (S1: Yes), the vehicle control device 11 may display on the operation display unit 171 a message that indicates that autonomous travel is possible (see FIG. 6A). As a result, the operator is able to recognize that the work vehicle 10 is capable of performing autonomous travel.

In step S2, the vehicle control device 11 determines whether or not an operation has been received from the operator that engages the PTO clutch using the PTO clutch lever 14L. When the vehicle control device 11 receives an operation that engages the PTO clutch (S2: Yes), it shifts the processing to step S3. On the other hand, when the vehicle control device 11 does not receive an operation from the operator that engages the PTO clutch (S2: No), it shifts the processing to step S6.

In step S3, the vehicle control device 11 causes the work vehicle 10 to perform autonomous travel along the target route R. The target route R is, for example, straight routes that are parallel to a reference line L1 that passes through point A and point B that have been registered by an operation performed by the operator, and is generated in the operation device 17. When the vehicle control device 11 receives an operation from the operator that engages the PTO clutch, the work vehicle 10 starts automatic steering such that it travels along the straight route among the plurality of straight routes included in the target route R that is closest to the current position P0 (see FIG. 5C). As a result, the vehicle control device 11 causes the work vehicle 10 to perform autonomous travel by automatic steering along a straight route, and executes work (such as planting work) by setting the work machine 14 to a drive state (a state where power is transmitted to the work machine 14).

Next, in step S4, the vehicle control device 11 determines whether or not a steering operation (steering) of the steering wheel 137 has been received from the operator. When the vehicle control device 11 receives a steering operation of the steering wheel 137 from the operator (S4: Yes), it shifts the processing to step S5. For example, when the work vehicle 10 approaches the terminal end Pe of a straight route (starting end of a turning route) (see FIG. 5C), the operator reduces the vehicle speed and steers the steering wheel 137 in the direction of the next straight route. On the other hand, when the vehicle control device 11 has not received a steering operation of the steering wheel 137 from the operator (S4: No), it shifts the processing to step S3. The vehicle control device 11 continues performing autonomous travel processing until a steering operation of the steering wheel 137 is received from the operator (S4: No).

In step S5, the vehicle control device 11 determines whether or not a change amount of the steering wheel 137 has exceeded a threshold. For example, the vehicle control device 11 determines whether or not the change amount of the steering direction and the operation time of the steering wheel 137 has exceeded a threshold set according to the vehicle speed of the work vehicle 10. Here, the vehicle control device 11 sets a first threshold when the vehicle speed of the work vehicle 10 is a high speed, and sets a second threshold that is lower than the first threshold when the vehicle speed of the work vehicle 10 is a low speed. Furthermore, the vehicle control device 11 may set the threshold to a smaller value as the vehicle speed of the work vehicle 10 decreases.

When the change amount of the steering wheel 137 has exceeded the threshold (the first threshold or the second threshold) corresponding to the vehicle speed (S5: Yes), the vehicle control device 11 shifts the processing to step S6. On the other hand, when the change amount of the steering wheel 137 has not exceeded the threshold corresponding to the vehicle speed (S5: No), the vehicle control device 11 shifts the processing to step S3. The vehicle control device 11 continues performing autonomous travel processing until the change amount of the steering wheel 137 exceeds the threshold corresponding to the vehicle speed (S5: No).

In step S6, the vehicle control device 11 switches from autonomous travel to manual travel. For example, when the change amount of the steering wheel 137 has exceeded the first threshold while the work vehicle 10 is performing autonomous travel at a high speed, the vehicle control device 11 switches from autonomous travel to manual travel. Furthermore, for example, when the change amount of the steering wheel 137 has exceeded the second threshold (note: second threshold < first threshold) while the work vehicle 10 is performing autonomous travel at a low speed, the vehicle control device 11 switches from autonomous travel to manual travel. As a result, for example, the change amount of the steering wheel 137 exceeds the second threshold when the work vehicle 10 approaches the terminal end Pe of the straight route and the operator reduces the vehicle speed and steers the steering wheel 137 in the direction of the next straight route, and switching occurs from autonomous travel to manual travel.

In the processing of each step described above, the vehicle control device 11 completes the travel control processing at the time the work vehicle 10 completes the work (at the time of arrival at a work completion position). The vehicle control device 11 repeats the processing of steps S1 to S6 until the work vehicle 10 completes the work.

As described above, the vehicle control device 11 executes the travel control processing with respect to the work vehicle 10.

As described above, the vehicle control device 11 according to the present embodiment controls the travel of the work vehicle 10 that is capable of switching between autonomous travel performed by automatic steering and manual travel performed by manual steering by the user. Furthermore, the vehicle control device 11 receives a user operation made with respect to an operation tool that causes the work vehicle 10 to execute a predetermined motion, causes the work vehicle 10 to execute a motion corresponding to the user operation made with respect to the operation tool, and switches from autonomous travel to manual travel when a change amount that relates to the operation tool corresponding to the user operation exceeds a threshold while the work vehicle 10 is performing autonomous travel.

Moreover, the vehicle control device 11 sets the threshold based on setting information of the work vehicle 10. For example, the vehicle control device 11 sets the threshold according to the vehicle speed of the work vehicle 10. As another embodiment, the vehicle control device 11 may set the threshold based on work information of the work vehicle 10. More specifically, the vehicle control device 11 may set the threshold based on the work content of the work vehicle 10, the state of the field F (work area), the position of the work route, and the like. That is, the vehicle control device 11 sets the threshold based on at least one of the vehicle speed of the work vehicle 10, the work content of the work vehicle 10, the state of a work area, and the position of the work path.

For example, the vehicle control device 11 may set the threshold of the change amount of the steering wheel 137 when performing planting work and the threshold of the change amount of the steering wheel 137 when performing tilling work to different values.

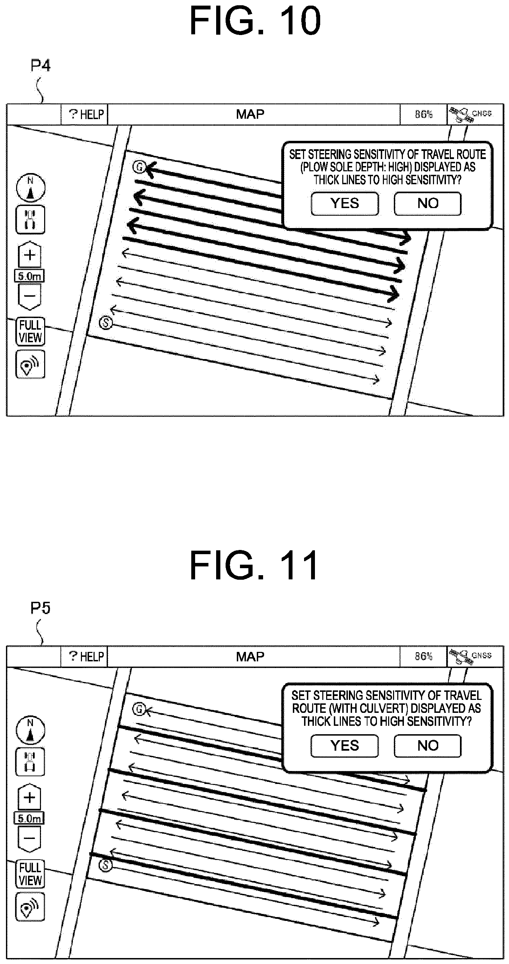

Moreover, for example, the vehicle control device 11 may set the threshold value according to the tilling depth of the field F. For example, the vehicle control device 11 sets the threshold of the change amount of the steering wheel 137 to a large value in locations (work routes) where the tilling depth is deep to make the steering operation sensitivity low, and sets the threshold of the change amount of the steering wheel 137 to a small value in locations (work routes) where the tilling depth is shallow to make the steering operation sensitivity high. In addition, as shown in FIG. 10, the vehicle control device 11 may display a selection screen P4 that selects whether or not to set the steering operation sensitivity corresponding to the threshold to be high. The vehicle control device 11 sets the threshold according to the selection operation performed by the operator on the selection screen P4.

Moreover, for example, the vehicle control device 11 may set the threshold value according to the presence or absence of a culvert in the field F. For example, the vehicle control device 11 sets the threshold of the change amount of the steering wheel 137 to a large value in locations (work routes) where a culvert exists to make the steering operation sensitivity low, and sets the threshold of the change amount of the steering wheel 137 to a small value in locations (work routes) where a culvert does not exist to make the steering operation sensitivity high. In addition, as shown in FIG. 11, the vehicle control device 11 may display a selection screen P5 that selects whether or not to set the steering operation sensitivity corresponding to the threshold to be high. The vehicle control device 11 sets the threshold according to the selection operation performed by the operator on the selection screen P5.

Moreover, for example, the vehicle control device 11 may set the threshold value according to the soil characteristics (sandy soil, clay soil, and the like) of the field F. For example, the vehicle control device 11 sets the threshold value of the change amount of the steering wheel 137 to a small value when the field F has sandy soil, and sets the threshold value of the change amount of the steering wheel 137 to a large value when the field F has clay soil.

In this way, in cases such as when the tilling depth is deep, a culvert exists, or the soil characteristics have clay soil properties, because the load applied to the wheels by steering is large, it is necessary to increase the steering angle or to perform steering quickly. As a result, because the inertial force of the steering wheel 137 itself also increases, the load applied to the wheels by steering increases, and it is preferable that the threshold of the change amount of the steering wheel 137 is set to a large value.

Furthermore, for example, the vehicle control device 11 may set the threshold value according to the remaining amount of seedlings, fertilizer, chemicals, and the like. For example, the vehicle control device 11 sets the threshold value of the change amount of the steering wheel 137 to a small value when the remaining amount is small, and sets the threshold value of the change amount of the steering wheel 137 to a large value when the remaining amount is large.

The work content, the tilling depth of the field F, the presence or absence of a culvert in the field F, the soil characteristics of the field F, and the remaining amount of seedlings, fertilizer, and chemicals are examples of the work information of the work vehicle 10. As described above, the vehicle control device 11 may set the threshold based on the setting information (such as the vehicle speed) of the work vehicle 10, or may set the threshold based on the work information. Moreover, the vehicle control device 11 may set the threshold based on information that combines the setting information and the work information.

According to the present embodiment, because the threshold is set based on at least one of the setting information and the work information of the work vehicle 10, and switching occurs from autonomous travel to manual travel when the change amount that relates to the operation tool corresponding to the user operation exceeds the threshold while the work vehicle 10 is performing autonomous travel, for example, it is possible to prevent the work vehicle 10 from switching to manual travel at a location that is not intended by the operator. As a result, it is possible to appropriately switch from autonomous travel to manual travel.

[Other Embodiments]The present invention is not limited to the embodiment described above. Other embodiments of the present invention are described below.

The vehicle control device 11 may have a configuration in which the operator is able to select the operation tool that is linked to the travel mode switching function. More specifically, the vehicle control device 11 receives on a setting screen an operation that selects the type of operation tool to be linked to the travel mode switching function. For example, the setting screen P1 illustrated in FIG. 7C displays the item K2 displayed as "linked operation selection" for selecting the operation tool that is linked to the travel mode switching function. The display processing unit 113 may display the item K2 displayed as "linked operation selection" in a selectable state (active state) when the item K1 displayed as "auto-linked machine operation" is set to "ON".

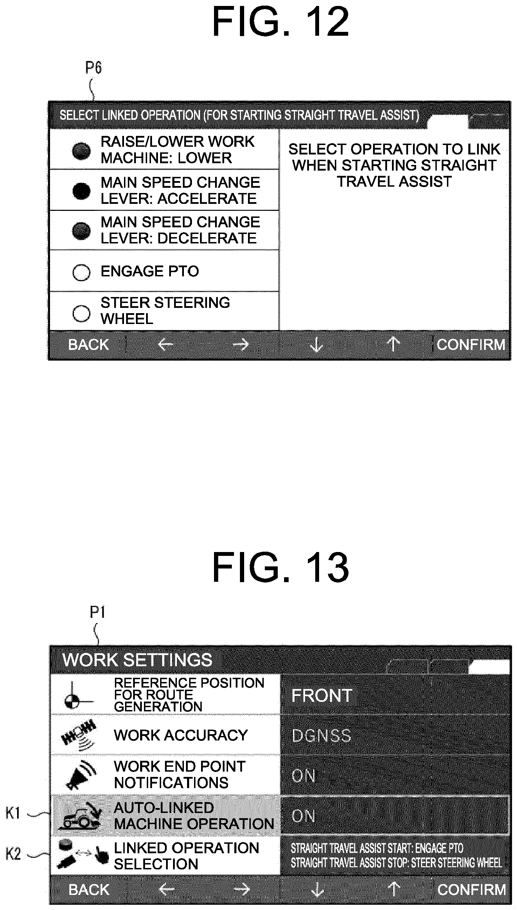

When the operator selects the item K2 on the setting screen P1 (by pressing a confirmation button), the display processing unit 113 displays the setting screen P6 illustrated in FIG. 12. When the operator selects the operation tool on the setting screen P6 ("PTO engaged", "steering wheel steering" in FIG. 12) and presses "confirm", the reception processing unit 112 receives the selection operation and sets the PTO clutch lever 14L and the steering wheel 137 as the operation tools that are linked to the travel mode switching function.

Furthermore, when the operator selects the PTO clutch lever 14L as the operation tool for starting autonomous travel, and selects the steering wheel 137 as the operation tool for stopping autonomous travel (for starting manual travel), as shown in FIG. 13, the display processing unit 113 may display the setting content in the item K2 displayed as "linked operation selection" on the setting screen P1.

As a result, the operator is able to link the travel mode switching function to the desired operation tool.

The operation tool for starting autonomous travel and the operation tool for stopping autonomous travel (for starting manual travel) may be the same operation tool.

The travel control system of the present invention may be configured by the work vehicle 10 alone, or may be configured by a server provided with each of the processing units included in the vehicle control device 11. Also, the travel control system may be configured by the work vehicle 10 provided with the vehicle control device 11.

[Supplementary Notes of the Invention]A summary of the invention extracted from the embodiment is described as the following supplementary notes. Note that the configurations and processing functions described in the supplementary notes below may be selected, omitted, and combined as appropriate.

### <Supplementary Note 1>

A travel control method that controls travel of a work vehicle that is capable of switching between autonomous travel performed by automatic steering and manual travel performed by manual steering by a user, the method comprising the steps of:
receiving a user operation performed with respect to an operation tool that causes the work vehicle to execute a predetermined motion;
causing the work vehicle to execute a motion corresponding to the user operation performed with respect to the operation tool;
switching from autonomous travel to manual travel when a change amount relating to the operation tool corresponding to the user operation exceeds a threshold while the work vehicle is performing autonomous travel; and
setting the threshold based on at least one of setting information and work information of the work vehicle.

### <Supplementary Note 2>

The travel control method according to supplementary note 1, wherein
the threshold is set based on at least one of a vehicle speed of the work vehicle, a work content of the work vehicle, a state of a work area, and a position of a work path.

### <Supplementary Note 3>

The travel control method according to supplementary note 2, wherein
the operation tool is at least one of a steering device that changes a travel direction of the work vehicle, a raising/lowering device that raises and lowers a work machine of the work vehicle, and a speed change device that changes a vehicle speed of the work vehicle.

### <Supplementary Note 4>

The travel control method according to supplementary note 3, wherein
when the operation tool is the steering device, switching occurs from autonomous travel to manual travel when a change amount relating to the steering device corresponding to the user operation exceeds a first threshold while the work vehicle is performing autonomous travel at a first vehicle speed, and switching occurs from autonomous travel to manual travel when a change amount relating to the steering device corresponding to the user operation exceeds a second threshold that is smaller than the first threshold while the work vehicle is performing autonomous travel at a second vehicle speed that is lower than the first vehicle speed.

### <Supplementary Note 5>

The travel control method according to supplementary note 4, wherein
the threshold is set to a smaller value as a vehicle speed of the work vehicle decreases.

### <Supplementary Note 6>

The travel control method according to supplementary notes 4 or 5, wherein
a change amount relating to the steering device is a change amount of at least one of a steering direction, an operation time, an operation amount, and an operation torque of the steering device.

### <Supplementary Note 7>

The travel control method according to any of supplementary notes 1 to 6, wherein

the work vehicle is provided with a work machine that performs predetermined work, and further executes switching from manual travel to autonomous travel when an operation that drives the work machine is received while the work vehicle is performing manual travel.

### <Supplementary Note 8>

The travel control method according to supplementary note 7, wherein
when switching has occurred from manual travel to autonomous travel, the threshold is changed according to a vehicle speed of the work vehicle.

### REFERENCE SIGNS LIST

10 Work vehicle
11 Vehicle control device
12 Storage unit
13 Travel device
13L Speed change lever (operation tool)
14 Work machine
14L PTO clutch lever (operation tool)
15 Communication unit
16 Positioning device
17 Operation device
111 Travel processing unit
112 Reception processing unit
113 Display processing unit
114 Motion processing unit
115 Determination processing unit
116 Setting processing unit
137 Steering wheel (operation tool)
F Field
R Target route

## Claims

1. A travel control method that controls travel of a work vehicle that is capable of switching between autonomous travel performed by automatic steering and manual travel performed by manual steering by a user, the method comprising the steps of:
receiving a user operation performed with respect to an operation tool that causes the work vehicle to execute a predetermined motion;
causing the work vehicle to execute a motion corresponding to the user operation performed with respect to the operation tool;
switching from autonomous travel to manual travel when a change amount relating to the operation tool corresponding to the user operation exceeds a threshold while the work vehicle is performing autonomous travel; and
setting the threshold based on at least one of setting information and work information of the work vehicle.

2. The travel control method according to claim 1, wherein
the threshold is set based on at least one of a vehicle speed of the work vehicle, a work content of the work vehicle, a state of a work area, and a position of a work path.

3. The travel control method according to claim 2, wherein
the operation tool is at least one of a steering device that changes a travel direction of the work vehicle, a raising/lowering device that raises and lowers a work machine of the work vehicle, and a speed change device that changes a vehicle speed of the work vehicle.

4. The travel control method according to claim 3, wherein
when the operation tool is the steering device, switching occurs from autonomous travel to manual travel when a change amount relating to the steering device corresponding to the user operation exceeds a first threshold while the work vehicle is performing autonomous travel at a first vehicle speed, and switching occurs from autonomous travel to manual travel when a change amount relating to the steering device corresponding to the user operation exceeds a second threshold that is smaller than the first threshold while the work vehicle is performing autonomous travel at a second vehicle speed that is lower than the first vehicle speed.

5. The travel control method according to claim 4, wherein
the threshold is set to a smaller value as a vehicle speed of the work vehicle decreases.

6. The travel control method according to claim 4 or 5, wherein
the change amount relating to the steering device is a change amount of at least one of a steering direction, an operation time, an operation amount, and an operation torque of the steering device.

7. The travel control method according to claim 1, wherein
the work vehicle is provided with a work machine that performs predetermined work, and further executes switching from manual travel to autonomous travel when an operation that drives the work machine is received while the work vehicle is performing manual travel.

8. The travel control method according to claim 7, wherein
when switching has occurred from manual travel to autonomous travel, the threshold is changed according to a vehicle speed of the work vehicle.

9. A travel control system that controls travel of a work vehicle that is capable of switching between autonomous travel performed by automatic steering and manual travel performed by manual steering by a user, the system comprising:
a reception processing unit that receives a user operation performed with respect to an operation tool that causes the work vehicle to execute a predetermined motion;
a motion processing unit that causes the work vehicle to execute a motion corresponding to the user operation performed with respect to the operation tool;
a travel processing unit that switches from autonomous travel to manual travel when a change amount relating to the operation tool corresponding to the user operation exceeds a threshold while the work vehicle is performing autonomous travel; and
a setting processing unit that sets the threshold based on at least one of setting information and work information of the work vehicle.

10. A travel control program that controls travel of a work vehicle that is capable of switching between autonomous travel performed by automatic steering and manual travel performed by manual steering by a user, the program causing one or more processors to execute the steps of:
receiving a user operation performed with respect to an operation tool that causes the work vehicle to execute a predetermined motion;
causing the work vehicle to execute a motion corresponding to the user operation performed with respect to the operation tool;
switching from autonomous travel to manual travel when a change amount relating to the operation tool corresponding to the user operation exceeds a threshold while the work vehicle is performing autonomous travel; and
setting the threshold based on at least one of setting information and work information of the work vehicle.
